# EUROPEAN PATENT APPLICATION

(11) **EP 2 543 880 A2**
(43) Date of publication of application: **09.01.2013**
(21) Application number: 11005988.8
(22) Date of filing: 21.07.2011
(51) Int. Cl.: F03G 6/06, F24J 2/54

(54) **Solar generator apparatus with sun-tracking function**

(30) Priority: 08.07.2011 US 178999
(71) Applicant: TOPPER SUN ENERGY TECHNOLOGY CO., LTD., Hsinchu County 303 (TW); Luo, Chia Ching, Hsinchu County 303 (TW)
(72) Inventor: Luo, Chia Ching, Hukou Township Hsinchu County 303 (TW)
(74) Representative: Urner, Peter

(57) **Abstract**

A solar generator apparatus (1) with a sun-tracking function includes a movable module, a first support structure (20), a connection structure (30), a second support structure (40), a carrying structure (50) and a solar generator module (60). The first support structure (20) has a first end (21) connected to the movable module. The connection structure (30) has a first end (31) connected to the movable module. The second support structure (40) has a first end connected to a second end (41) of the connection structure. The carrying structure (50) has a first end (51) connected to a second end (42) of the second support structure (40), and a second end (52) connected to a second end (22) of the first support structure (20). The solar generator module (60) is disposed on the carrying structure (50). The movable module may be rotated about the second support structure (40), and a difference between lengths of the first and second support structures (20,40) may be adjusted so that the solar generator module (60) has the sun-tracking function.

## Description

### BACKGROUND OF THE INVENTION

### Field of the Invention

The invention relates to a solar generator apparatus with a sun-tracking function.

### Related Art

Usually, a solar generator system is mounted on a building or at a fixed manner, and cannot be adjusted according to the azimuth angle of the sun, so that the received availability of the solar energy is significantly limited.

An alternative conventional solar generator system is disposed on a movable support. The angle of this solar generator system can be adjusted with the change of the position of the sun, so that the received availability of the solar energy is increased. This solar generator system traces the sun by adjusting the angle according to the position of the sun in the sky, and is only suitable for the application with the small-scale generator, but is disadvantageous to the application with the large-scale generator. Thus, the conventional solar generator system still has to be improved.

### SUMMARY OF THE INVENTION

It is an object of the invention to provide a solar generator apparatus, which has a sun-tracking function and is feasible to the application with either the small-scale generator or the large-scale generator.

To achieve the above-identified object, the invention provides a solar generator apparatus including a movable module, a first support structure, a connection structure, a second support structure, a carrying structure and a solar generator module. The first support structure has a first end connected to the movable module. The connection structure has a first end connected to the movable module. The second support structure has a first end connected to a second end of the connection structure. The carrying structure has a first end connected to a second end of the second support structure, and a second end connected to a second end of the first support structure. The solar generator module is disposed on the carrying structure. The movable module is rotatable about the second support structure, and a difference between lengths of the first support structure and the second support structure may be adjusted so that the solar generator module has a sun-tracking function.

Accordingly, the solar generator apparatus with the sun-tracking function according to the invention is feasible to the application with either the small-scale generator or the large-scale generator, can be rotated and moved with multiple degrees of freedom, and can be adopted to various applications to effectively enhance the received availability of the solar energy.

Further scope of the applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understandable from the detailed description given hereinbelow and the accompanying drawings which are given by way of illustration only, and thus are not limitative of the present invention.

FIG. 1 is a pictorial view showing a solar generator apparatus according to a first embodiment of the invention.

FIG. 2 is a pictorial view showing a solar generator apparatus according to a second embodiment of the invention.

FIG. 3 is a pictorial view showing a solar generator apparatus according to a third embodiment of the invention.

FIG. 4 is a cross-sectional view showing a carrying structure of the solar generator apparatus according to each of the second and third embodiments of the invention.

FIG. 5 is a schematic illustration showing a movable module and a solar generator module according to the invention.

FIG. 6 is a schematic plane view showing a solar panel according to the invention.

### DETAILED DESCRIPTION OF THE INVENTION

The present invention will be apparent from the following detailed description, which proceeds with reference to the accompanying drawings, wherein the same references relate to the same elements.

The following term "connection" includes, without limitation to, direct connection or indirect connection.

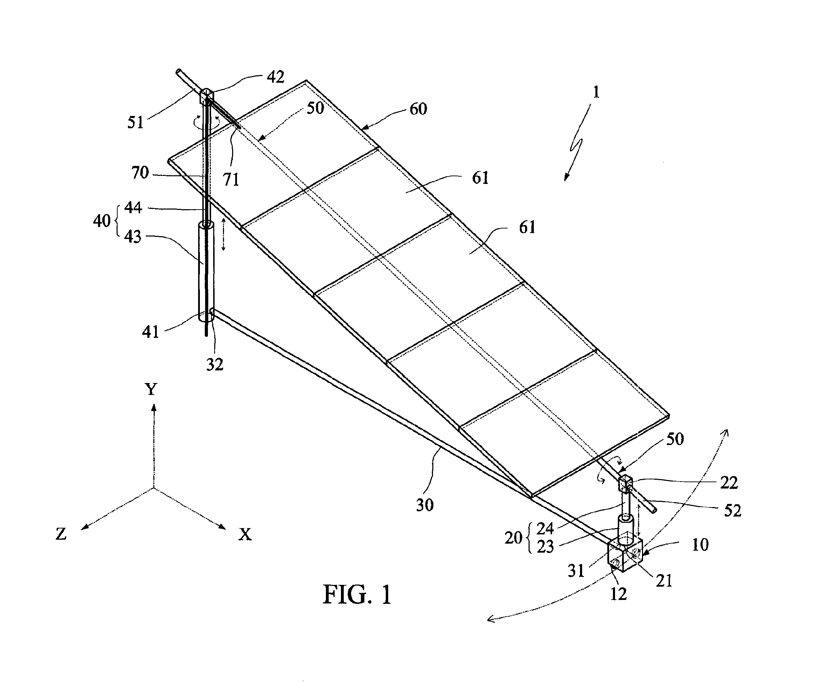

FIG. 1 is a pictorial view showing a solar generator apparatus 1 according to a first embodiment of the invention. Referring to FIG. 1, the solar generator apparatus 1 of this embodiment with the sun-tracking function includes a movable module 10, a first support structure 20, a connection structure 30, a second support structure 40, a carrying structure 50 and a solar generator module 60.

The movable module 10 is a movable module providing multiple degrees of freedom of movements on the X-Z plane. The detailed structure thereof will be described later. At least one of the first support structure 20 and the second support structure 40 is retractable. For example, the first support structure 20 and the second support structure 40 are disposed in a manner perpendicular to the floor or ground. However, the invention is not particularly restricted thereto. In another embodiment, the first support structure 20 and the second support structure 40 may also be disposed on the floor or ground slantingly.

The first support structure 20 has a first end 21 connected to the movable module 10. The first support structure 20 includes a lower column 23 and an upper column 24. The lower column 23 is connected to the connection structure 30. The upper column 24 is fit with the lower column 23, connected to the carrying structure 50, and retractable relative to the lower column 23.

The connection structure 30 has a first end 31 connected to the movable module 10. For example, the connection structure 30 is disposed in the horizontal direction. However, the invention is also not restricted thereto, and the connection structure 30 may also be disposed slantingly.

The second support structure 40 has a first end 41 connected to a second end 32 of the connection structure 30, and is mounted to the fixed structure, such as the floor, ground or roof. In one example, the second support structure 40 includes a lower column 43 and an upper column 44. The lower column 43 is connected to the connection structure 30. The upper column 44 is fit with the lower column 43, connected to the carrying structure 50, and is retractable and rotatable relative to the lower column 43.

The carrying structure 50 has a first end 51 connected to a second end 42 of the second support structure 40, and a second end 52 connected to a second end 22 of the first support structure 20.

The solar generator module 60 is disposed on the carrying structure 50. For example, screws can be provided to screw the solar generator module 60 to the carrying structure 50. The carrying structure 50 is rotatable relative to the first support structure 20 and the second support structure 40. The solar generator module 60 includes several solar panels 61. That is, the movable module 10 is rotatable about the second support structure 40, and the difference between the lengths of the first support structure 20 and the second support structure 40 can be manually or automatically adjusted so that the solar generator module 60 has the sun-tracking function.

In this embodiment, the carrying structure 50 is rotatably connected to the first support structure 20 and the second support structure 40. Thus, the solar generator module 60 can be rotated about a line, which connects the first end 51 of the carrying structure 50 to the second end 52 of the carrying structure 50 and serves as a center axis, so that the angle of the solar generator module 60 can be manually or automatically adjusted in a convenient manner.

In addition, the solar generator apparatus 1 may further include a cable 70 having one end 71 connected to the solar generator module 60. The cable 70 is disposed in the second support structure 40, and may be connected to a charge controller or a grid tie inverter to store the electric energy or power the electric equipment. The second support structure 40 may be a hollow cylinder.

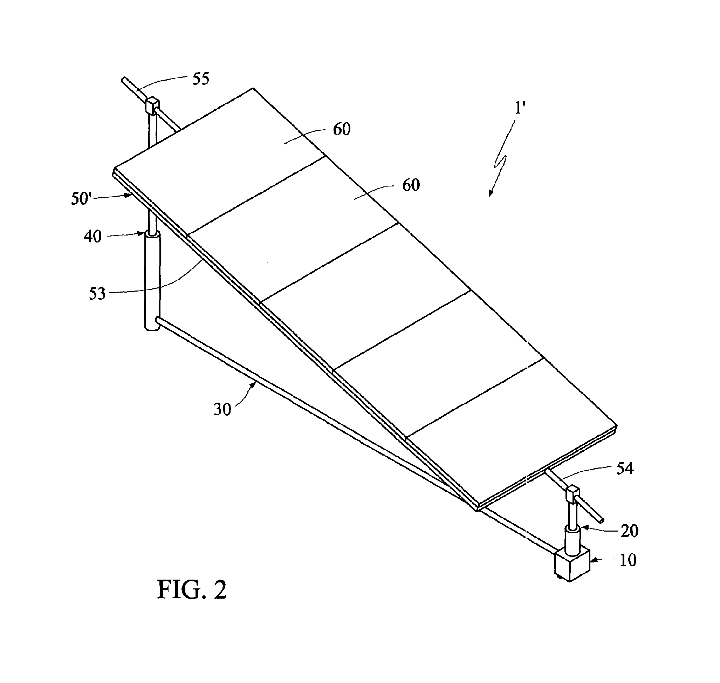

FIG. 2 is a pictorial view showing a solar generator apparatus 1' according to a second embodiment of the invention. As shown in FIG. 2, this embodiment is similar to the first embodiment except for the carrying structure 50'. In the first embodiment, the carrying structure 50 is a longitudinal structure, such as a hollow cylinder. In the second embodiment, the main structure of the carrying structure 50' is a frame body, so that the solar panel 61 of the solar generator module 60 can be conveniently fixed to the carrying structure 50'.

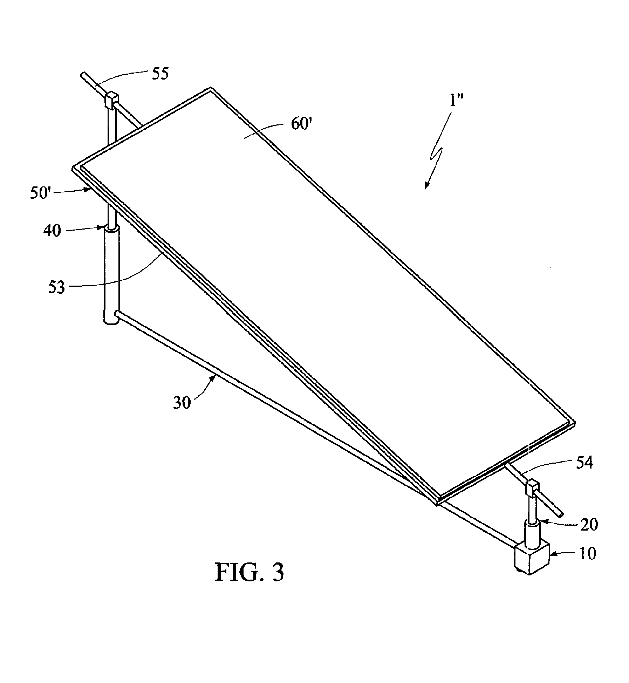

FIG. 3 is a pictorial view showing a solar generator apparatus 1" according to a third embodiment of the invention. As shown in FIG. 3, this embodiment is similar to the second embodiment except that the solar generator module 60' only contains one solar panel 61. This means that the solar generator apparatus 1/1' in the first/second embodiment is feasible to the high-power generator system, or even multiple solar generator apparatuses 1/1' may be arranged in an array, while the solar generator apparatus 1" of the third embodiment is feasible to the small-scale/low-power generator system.

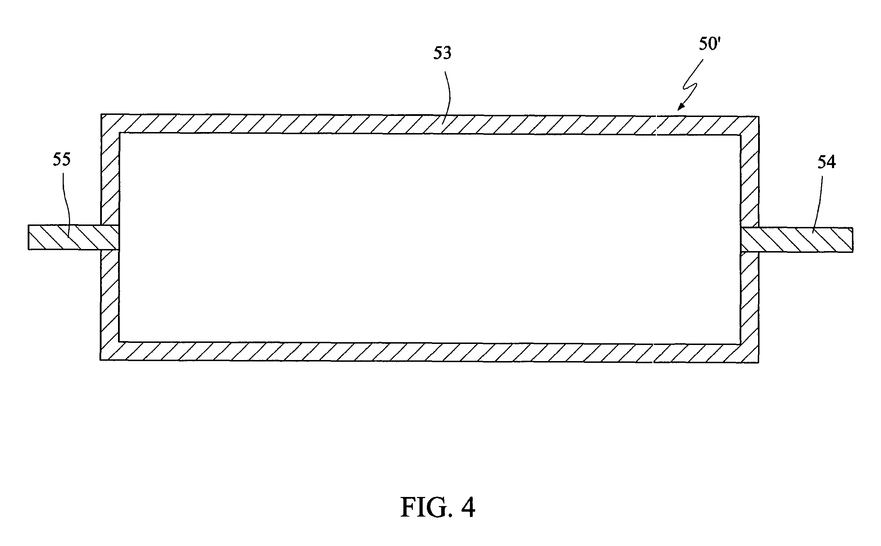

The detailed structure of the carrying structure 50' will be described in the following. FIG. 4 is a cross-sectional view showing the carrying structure 50' of the solar generator apparatus according to each of the second and third embodiments of the invention. Referring to FIGS. 2 to 4, the carrying structure 50' includes a frame body 53, a first frame 54 and a second frame 55. The frame body 53 is, for example, a rectangular frame body. The first frame 54 connects the frame body 53 to the first support structure 20. The second frame 55 connects the frame body 53 to the second support structure 40. The frame body 53 still can be rotated relative to the first support structure 20 and the second support structure 40. Thus, the first frame 54 may be fixed to the frame body 53 and pivotally connected to the first support structure 20, while the second frame 55 can be fixed to the frame body 53 and pivotally connected to the second support structure 40. Alternatively, the first frame 54 may be pivotally connected to the frame body 53 and fixed to the first support structure 20, while the second frame 55 may be pivotally connected to the frame body 53 and fixed to the second support structure 40.

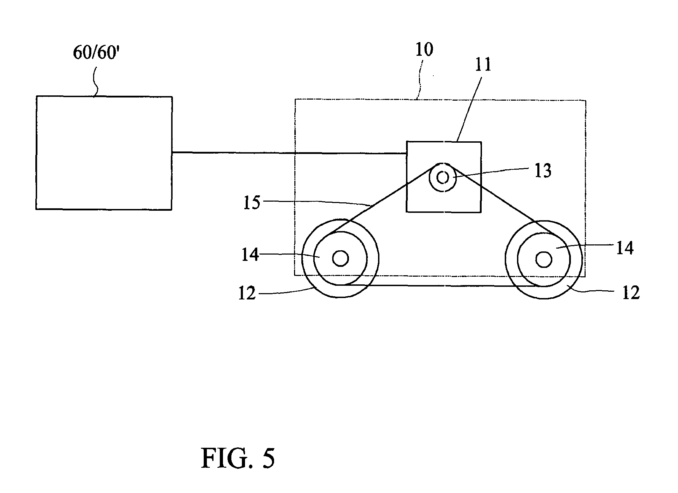

FIG. 5 is a schematic illustration showing the movable module 10 and the solar generator module 60 according to the invention. Referring to FIG. 5, the movable module 10 includes a motor 11 and a plurality of rollers 12. The rollers 12 are driven by the motor 11 to rotate, so that the movable module 10 is rotated about the second support structure 40, as shown in FIG. 1. For example, the motor 11 drives a pulley 14, disposed coaxially with the roller 12, through a driving pulley 13, a belt 15 or any other transmission element, and thus drives the roller 12 to rotate. In addition, the motor 11 may be powered by the solar generator module 60.

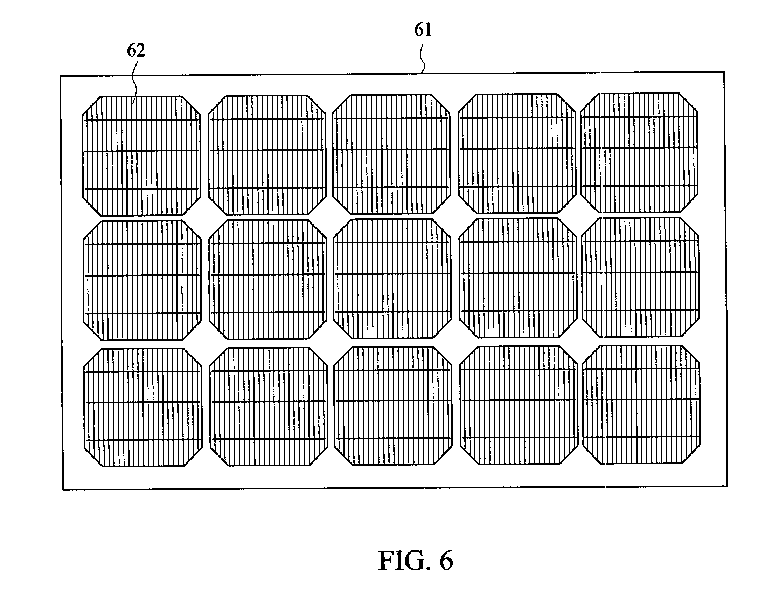

FIG. 6 is a schematic plane view showing the solar panel 61 according to the invention. As shown in FIG. 6, the solar panel 61 is constituted by multiple solar cells 62 connected in series or in parallel.

As shown in FIG. 1, the carrying structure 50 is disposed on the X-Y plane, so the solar generator module 60 can be rotated about a line on the X-Y plane. On the other hand, the movable module 10 is movable and the upper column 44 can be rotated relative to the lower column 43, so the solar generator module 60 can be rotated about the Y axis. Furthermore, the difference between the lengths of the first support structure 20 and the second support structure 40 can be adjusted, so the solar generator module 60 can be rotated about a line parallel to the Z axis. Consequently, the solar generator module 60 has the more flexible sun-tracking function.

Accordingly, the solar generator apparatus with the sun-tracking function according to the invention is feasible to the application with either the small-scale generator or the large-scale generator, can be rotated and moved with multiple degrees of freedom, and can be adopted to various applications to effectively enhance the received availability of the solar energy.

While the present invention has been described by way of examples and in terms of preferred embodiments, it is to be understood that the present invention is not limited thereto. To the contrary, it is intended to cover various modifications. Therefore, the scope of the appended claims should be accorded the broadest interpretation so as to encompass all such modifications.

## Claims

1. A solar generator apparatus, comprising:
a movable module;
a first support structure having a first end connected to the movable module;
a connection structure having a first end connected to the movable module;
a second support structure having a first end connected to a second end of the
connection structure;
a carrying structure having a first end connected to a second end of the second
support structure, and a second end connected to a second end of the first support structure; and
a solar generator module disposed on the carrying structure, wherein the
movable module is rotatable about the second support structure, and a difference between lengths of the first support structure and the second support structure may be adjusted so that the solar generator module has a sun-tracking function.

2. The solar generator apparatus according to claim 1, wherein the carrying structure is rotatably connected to the first support structure and the second support structure.

3. The solar generator apparatus according to claim 1, wherein at least one of the first support structure and the second support structure is retractable.

4. The solar generator apparatus according to claim 1, wherein the second support structure comprises:
a lower column connected to the connection structure; and
an upper column, which is fit with the lower column, connected to the carrying
structure, and retractable and rotatable relative to the lower column.

5. The solar generator apparatus according to claim 1, wherein the first support structure comprises:
a lower column connected to the connection structure; and
an upper column, which is fit with the lower column, connected to the carrying
structure, and retractable relative to the lower column.

6. The solar generator apparatus according to claim 1, further comprising:
a cable having one end connected to the solar generator module, the cable
being disposed in the second support structure.

7. The solar generator apparatus according to claim 1, wherein the carrying structure comprises:
a frame body;
a first frame connecting the frame body to the first support structure; and
a second frame connecting the frame body to the second support structure.

8. The solar generator apparatus according to claim 1, wherein the movable module comprises:
a motor; and
a plurality of rollers, driven by the motor to rotate so that the movable module is
rotated about the second support structure.

9. The solar generator apparatus according to claim 8, wherein the motor is powered by the solar generator module.

10. The solar generator apparatus according to claim 1, wherein the solar generator module comprises a plurality of solar panels, each of which comprises a plurality of solar cells connected together.
